(19) Europäisches Patentamt
European Patent Office
Office européen des brevets

(11) **EP 4 600 920 A1**

(12) **EUROPEAN PATENT APPLICATION**
published in accordance with Art. 153(4) EPC

(43) Date of publication:
**13.08.2025   Bulletin 2025/33**

(51) International Patent Classification (IPC):
**G06V 20/62** (2022.01)

(21) Application number: **23878885.5**

(52) Cooperative Patent Classification (CPC):
**G06N 3/0464; G06N 3/048; G06N 3/08;
G06V 20/62; G06V 30/18; G06V 30/19**

(22) Date of filing: **15.09.2023**

(86) International application number:
**PCT/CN2023/119082**

(87) International publication number:
**WO 2024/082891 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.10.2022   CN 202211289351**

(71) Applicant: **Huawei Technologies Co., Ltd.
Shenzhen, Guangdong 518129 (CN)**

(72) Inventors:
• **FU, Yifei**
  **Shenzhen, Guangdong 518129 (CN)**
• **HU, Hailin**
  **Shenzhen, Guangdong 518129 (CN)**
• **ZHU, Mingjian**
  **Shenzhen, Guangdong 518129 (CN)**
• **CHEN, Xinghao**
  **Shenzhen, Guangdong 518129 (CN)**
• **WANG, Yunhe**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **DATA PROCESSING METHOD AND RELATED DEVICE**

(57)     Embodiments of this application disclose a data processing method. The method is applied to a text recognition/character recognition scenario. The method includes: obtaining input data, where the input image is image data or audio data; obtaining a second modal feature based on a first modal feature of the input data, where the first modal feature is a visual feature of the image data or an audio feature of the audio data, and the second modal feature is a character feature; and fusing the first modal feature and the second modal feature to obtain a target feature. In this way, different modal data information can be efficiently fused, so that the obtained target feature has a feature of multi-modal data, and is more expressive. Therefore, a first recognition result obtained based on the target feature is more precise. Compared with a method for determining a recognition result based on only a corrected second modal feature, this method can reduce over-correction of the second modal feature by reintroducing a before-correction first modal feature.

| Obtain input data | 501 |
| Extract a first modal feature of the input data | 502 |
| Obtain a second modal feature based on the first modal feature | 503 |
| Fuse the first modal feature and the second modal feature to obtain a target feature | 504 |
| Obtain a first recognition result of the input data based on the target feature | 505 |

FIG. 5

## Description

This application claims priority to Chinese Patent Application No. 202211289351.X, filed with the China National Intellectual Property Administration on October 20, 2022 and entitled "DATA PROCESSING METHOD AND RELATED DEVICE", which is incorporated herein by reference in its entirety.

## TECHNICAL FIELD

This application relates to the artificial intelligence field, and in particular, to a data processing method and a related device.

## BACKGROUND

Artificial intelligence (artificial intelligence, AI) involves theories, methods, technologies, and application systems, and refers to the use of digital computers or machines controlled by digital computers to simulate, extend, and expand human intelligence, perceive the environment, acquire knowledge, and use knowledge to achieve the best results. In other words, artificial intelligence is a branch of computer science that aims to understand the essence of intelligence and produce a new type of intelligent machine that can react in a way similar to human intelligence. Artificial intelligence is essentially the study of design principles and implementation methods of various intelligent machines, enabling them to possess perception, inference, and decision-making capabilities. Research in the field of artificial intelligence includes robotics, natural language processing, computer vision, decision-making and inference, human-machine interaction, recommendation and search, AI fundamental theories, and the like.

As an optical character recognition (optical character recognition, OCR) technology continues to develop rapidly, the application of using OCR technology to replace human labor for recognizing and processing text information in images has become increasingly widespread. The OCR technology is widely applied to real scenarios such as certificate recognition, license plate recognition, advertisement image and text recognition, and receipt recognition. In order to avoid visual occlusions and other adverse factors from interfering with the recognition content, language models are often used to correct character information identified by a visual model, and corrected results are used as final recognition results for the characters. However, the correction results are highly dependent on semantic information learned by the language models, and may lead to the modification of a correct recognition result to an incorrect one, resulting in over-correction problems in the above recognition method.

Therefore, how to resolve the over-correction problems of the language model in text recognition is an urgent technical problem to be resolved.

## SUMMARY

Embodiments of this application provide a data processing method and a related device, to improve precision of data character recognition.

A first aspect of embodiments of this application provides a data processing method. The method is applied to a text recognition/character recognition scenario. The method includes: obtaining input data, where the input image is image data or audio data; extracting a first modal feature of the input data; obtaining a second modal feature based on the first modal feature, where the first modal feature and the second modal feature are different modal features, the first modal feature is a visual feature of the image data or an audio feature of the audio data, and the second modal feature is a character feature; fusing the first modal feature and the second modal feature to obtain a target feature, where the target feature combines the first modal feature and the second modal feature, so that the target feature has richer modal information; and obtaining a first recognition result of the input data based on the target feature, where the first recognition result is used to indicate a character included in the input data.

In this embodiment of this application, the second modal feature is obtained based on the first modal feature of the input data, and the first modal feature and the second modal feature are fused to obtain the target feature. In this case, different modal data information can be efficiently fused, so that the obtained target feature has a feature of multi-modal data, and is more expressive. Therefore, the first recognition result obtained based on the target feature is more precise. Compared with a method for determining a recognition result based on only a corrected second modal feature, this method can reduce over-correction of the second modal feature by reintroducing a before-correction first modal feature.

Optionally, in a possible implementation of the first aspect, the step of obtaining a second modal feature based on the first modal feature includes: obtaining a second recognition result based on the first modal feature, where the second recognition result is a character recognition result of the image data or a character recognition result of the audio data; and obtaining the second modal feature based on the second recognition result.

In this possible implementation, the second modal feature is obtained based on the second recognition result related to the first modal feature, so that partial correction of the first modal feature can be implemented.

Optionally, in a possible implementation of the first aspect, the step of extracting a first modal feature of the input data includes: inputting the input data into a first feature extraction module to obtain the first modal feature, where the first feature extraction module is configured to extract the visual feature or the audio feature; and the obtaining the second modal feature based on the second recognition result includes: inputting the second recognition result into a second feature extraction module to obtain the second modal feature, where the second feature extraction module is configured to extract the character feature.

In this possible implementation, that the first feature extraction module is configured to extract the visual feature is used as an example. To reduce interference caused by adverse factors such as visual obstruction to recognized content, a second extracted feature may be used to correct a first modal feature recognized by a visual module.

Optionally, in a possible implementation of the first aspect, the foregoing step further includes: obtaining a target recognition result of the input data based on the second recognition result and the first recognition result. The target recognition result is used as a recognition result of the character in the input data. Alternatively, it is understood that the target recognition result is used as a final recognition result of the character in the input data.

In this possible implementation, especially for image recognition, both an original result (the second recognition result) obtained based on the first modal feature and a correction result (the first recognition result) obtained based on the second modal feature are considered, so that advantages of a strong correction capability of a language module (a module for obtaining the second modal feature) and a strong recognition capability of a visual module (a module for obtaining the first modal feature) can be combined, to improve a recognition capability of a character in an image.

Optionally, in a possible implementation of the first aspect, the step of obtaining a target recognition result of the input data based on the second recognition result and the first recognition result includes: obtaining a first probability and a second probability, where the first probability is a probability of each character in the first recognition result, and the second probability is a probability of each character in the second recognition result; and determining the target recognition result based on the first probability and the second probability.

In this possible implementation, the first probability of the character in the first recognition result and the second probability of the character in the second recognition result are fused, and both a probability of each character in a result corresponding to an initial modal and a probability of each character in the correction result are considered, so that precision of recognizing each character is improved.

Optionally, in a possible implementation of the first aspect, the determining the target recognition result based on the first probability and the second probability includes: adding a first probability and a second probability that correspond to characters at a same location in the first recognition result and the second recognition result; and determining the target recognition result based on a probability obtained through addition. The addition may be direct addition, addition after weighting, or the like. This is not specifically limited herein.

In this possible implementation, the probability of the character in the result corresponding to the initial modality and the probability of the character in the correction result are added, and the target recognition result is obtained based on a probability obtained through addition, so that precision of the target recognition result is improved.

Optionally, in a possible implementation of the first aspect, the step of fusing the first modal feature and the second modal feature to obtain a target feature includes: fusing a first modal feature and a second modal feature that are of characters at a same location, to obtain a target feature.

In this possible implementation, different modal features of the characters at the same location are fused, so that the target feature has different modal information. This improves the expression capability of the target feature.

Optionally, in a possible implementation of the first aspect, the foregoing step of obtaining a first recognition result of the input data based on the target feature includes: determining a correspondence between the target feature and a plurality of characters; obtaining a permutation mode set of the plurality of characters, where the permutation mode set includes a plurality of permutation modes; and performing maximum likelihood estimation on the last character in each permutation mode based on the permutation mode in the permutation mode set, to obtain the first recognition result.

In this possible implementation, maximum likelihood estimation is performed by using the last character in each permutation mode in the permutation mode set as a predicted character, so that different context information (for example, left-to-right and right-to-left) may be learned based on different permutation modes, to improve precision of the first recognition result.

Optionally, in a possible implementation of the first aspect, the input data is image data including a character, the first modal feature is a visual feature, and the second modal feature is a character feature.

In this possible implementation, the method may be applied to a scenario of character recognition or text recognition on an image, for example, a recognition scenario/an automatic entry scenario of certificate information and receipt information, a scenario of auxiliary reading for a disabled person, and a forbidden word filtering scenario.

Optionally, in a possible implementation of the first aspect, the input data is audio data, the first modal feature is an audio feature, and the second modal feature is a character feature.

In this possible implementation, the method may be applied to a scenario of character recognition or text recognition on an audio, for example, a scenario of auxiliary learning for the mute and deaf.

A second aspect of embodiments of this application provides a data processing device. The data processing device is used in a text recognition/character recognition scenario. The data processing device includes: an obtaining unit, configured to obtain input data, where the input image is image data or audio data; an extraction unit, configured to extract a first modal feature of the input data, where the obtaining unit is further configured to obtain a second modal feature based on the first modal feature, the first modal feature and the second modal feature are different modal features, the first modal feature is a visual feature of the image data or an audio feature of the audio data, and the second modal feature is a character feature; and a fusion unit, configured to fuse the first modal feature and the second modal feature to obtain a target feature, where the obtaining unit is further configured to obtain a first recognition result of the input data based on the target feature, and the first recognition result is used to indicate a character included in the input data.

Optionally, in a possible implementation of the second aspect, the obtaining unit is specifically configured to obtain a second recognition result based on the first modal feature, where the second recognition result is a character recognition result of the image data or a character recognition result of the audio data; and the obtaining unit is specifically configured to obtain the second modal feature based on the second recognition result.

Optionally, in a possible implementation of the second aspect, the extraction unit is specifically configured to input the input data into a first feature extraction module to obtain the first modal feature, where the first feature extraction module is configured to extract the visual feature or the audio feature; and the obtaining unit is specifically configured to input the second recognition result into a second feature extraction module to obtain the second modal feature, where the second feature extraction module is configured to extract the character feature.

Optionally, in a possible implementation of the second aspect, the obtaining unit is further configured to obtain a target recognition result of the input data based on the second recognition result and the first recognition result. The target recognition result is used as a recognition result of the character in the input data. Alternatively, it is understood that the target recognition result is used as a final recognition result of the character in the input data.

Optionally, in a possible implementation of the second aspect, the obtaining unit is specifically configured to obtain a first probability and a second probability, where the first probability is a probability of each character in the first recognition result, and the second probability is a probability of each character in the second recognition result; and the obtaining unit is specifically configured to determine the target recognition result based on the first probability and the second probability.

Optionally, in a possible implementation of the second aspect, the obtaining unit is specifically configured to add a first probability and a second probability that correspond to characters at a same location in the first recognition result and the second recognition result; and the obtaining unit is specifically configured to determine the target recognition result based on a probability obtained through addition.

Optionally, in a possible implementation of the second aspect, the fusion unit is specifically configured to fuse a first modal feature and a second modal feature that are of characters at a same location, to obtain a target feature.

Optionally, in a possible implementation of the second aspect, the obtaining unit is specifically configured to determine a correspondence between the target feature and a plurality of characters; the obtaining unit is specifically configured to obtain a permutation mode set of the plurality of characters, where the permutation mode set includes a plurality of permutation modes; and the obtaining unit is specifically configured to perform maximum likelihood estimation on the last character in each permutation mode based on the permutation mode in the permutation mode set, to obtain the first recognition result.

Optionally, in a possible implementation of the second aspect, the input data is image data including a character, the first modal feature is a visual feature, and the second modal feature is a character feature.

Optionally, in a possible implementation of the second aspect, the input data is audio data, the first modal feature is an audio feature, and the second modal feature is a character feature.

A third aspect of embodiments of this application provides a data processing device, including a processor, where the processor is coupled to a memory, the memory is configured to store a program or instructions, and when the program or the instructions are executed by the processor, the data processing device is enabled to implement the method according to the first aspect or any possible implementation of the first aspect.

A fourth aspect of embodiments of this application provides a computer-readable medium that stores a computer program or instructions. When the computer program or the instructions is/are run on a computer, the computer is enabled to perform the method according to the first aspect or any possible implementation of the first aspect.

A fifth aspect of embodiments of this application provides a computer program product. When the computer program product is executed on a computer, the computer is enabled to perform the method according to the first aspect or any possible implementation of the first aspect.

For technical effect brought by the second aspect, the third aspect, the fourth aspect, the fifth aspect, or any possible implementation thereof, refer to technical effect brought by the first aspect or different possible implementations of the first aspect. Details are not described herein again.

It can be learned from the foregoing technical solutions that this application has the following advantages: The second modal feature is obtained based on the first modal feature of the input data (which may be understood as a correction process of the first modal feature), and the first modal feature and the second modal feature are fused to obtain the target feature, so that the first recognition result obtained based on the target feature is more precise. Two modal features (the first modal feature and the second modal feature) are both considered in a process of performing character recognition on the input data. Because different modalities are represented in different manners, things are viewed from different perspectives accordingly. Therefore, there are some cross-connections/complementarity, and even a plurality of different information interactions between modalities. A richer target feature can be obtained by properly handling two modal features, to improve recognition precision. Compared with a method for determining a recognition result based on only a corrected second modal feature, this method can reduce over-correction of the second modal feature by reintroducing a before-correction first modal feature.

## BRIEF DESCRIPTION OF DRAWINGS

To describe technical solutions in embodiments of this application or in the conventional technology more clearly, the following briefly describes the accompanying drawings used in describing embodiments or the conventional technology. It is clear that the accompanying drawings in the following descriptions show merely some embodiments of this application, and a person of ordinary skill in the art can derive other drawings from these accompanying drawings without creative efforts.

FIG. 1 is a diagram of an application scenario according to an embodiment of this application;
FIG. 2A is a diagram of a receipt recognition scenario according to an embodiment of this application;
FIG. 2B is a diagram of a certificate recognition scenario according to an embodiment of this application;
FIG. 3 is a diagram of a structure of a system architecture according to an embodiment of this application;
FIG. 4 is a diagram of a hardware structure of a chip according to an embodiment of this application;
FIG. 5 is a schematic flowchart of a data processing method according to an embodiment of this application;
FIG. 6 is a diagram of an example of input data according to an embodiment of this application;
FIG. 7 is a diagram of a training mode and an inference mode of a correction module according to an embodiment of this application;
FIG. 8 is a diagram of a neural network according to an embodiment of this application;
FIG. 9 is another schematic flowchart of a data processing method according to an embodiment of this application;
FIG. 10 is another diagram of a neural network according to an embodiment of this application;
FIG. 11 is a diagram of a processing procedure of a probability fusion module according to an embodiment of this application;
FIG. 12 is a diagram of a structure of a data processing device according to an embodiment of this application; and
FIG. 13 is a diagram of another structure of a data processing device according to an embodiment of this application.

## DESCRIPTION OF EMBODIMENTS

The following describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.
For ease of understanding, mainly related terms and concepts in embodiments of this application are first described below.

1. Neural network

The neural network may include neurons. The neuron may be an operation unit that uses $X_s$ and an intercept b as an input. An output of the operation unit may be as follows:

$$h_{W,b}(x) = f\left(W^T x\right) = f\left(\sum_{s=1}^{n} W_s x_s + b\right).$$

In the formula, s=1, 2, ..., n, where n is a natural number greater than 1, $W_s$ is a weight of $X_s$, b is a bias of the neuron, and f is an activation function (activation function) of the neuron, for introducing a non-linear feature into the neural network to convert an input signal in the neuron into an output signal. The output signal of the activation function may serve as an input of a next convolutional layer. The activation function may be a Relu function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

Work at each layer of the neural network may be described by using a mathematical expression $y = a(Wx + b)$. In terms of a physical layer, work at each layer of the neural network may be understood as performing five operations on the input space (a set of input vectors) to complete transformation from input space to output space (namely, from row space to column space of a matrix). The five operations are as follows: 1. dimension increasing/dimension reduction; 2. scaling up/scaling down; 3. rotation; 4. translation; 5. "bending". The operations 1, 2, and 3 are performed by $Wx$, the operation 4 is performed by $+b$, and the operation 5 is performed by $a()$. The reason of using the expression "space" is that a classified object is not a single one but a type of things, and space means a set of objects of this type. $W$ is a weight vector, and each value in the vector indicates a weight value of one neuron in the neural network at this layer. The vector $W$ determines the foregoing space transformation from the input space to the output space, to be specific, a weight $W$ of each layer controls space transformation. A purpose of training the neural network is to finally obtain a weight matrix (a weight matrix formed by vectors $W$ at a plurality of layers) at all layers of a trained neural network. Therefore, a training process of the neural network is essentially to learn a manner of controlling space transformation, and more specifically, learning a weight matrix.

2. Convolutional neural network

The convolutional neural network (convolutional neural network, CNN) is a deep neural network with a convolutional structure. The convolutional neural network includes a feature extractor including a convolutional layer and a sampling sub-layer. The feature extractor may be considered as a filter. A convolution process may be considered as performing convolution by using a trainable filter and an input image or a convolutional feature map (feature map). The convolutional layer is a neuron layer, in the convolutional neural network, at which convolution processing is performed on an input signal. At the convolutional layer of the convolutional neural network, one neuron may be connected only to some adjacent-layer neurons. One convolutional layer usually includes several feature maps, and each feature map may include some neurons that are in a rectangular arrangement. Neurons in a same feature map share a weight, and the weight shared herein is a convolutional kernel. Weight sharing may be understood as that a manner of image information extraction manner is irrelevant to locations. A principle implied herein is that statistical information of a part of an image is the same as that of other parts. This means that image information learned in a part can be used in another part. Therefore, the same image information obtained through learning can be used for all locations on the image. At a same convolutional layer, a plurality of convolutional kernels may be used to extract different image information. Typically, a larger quantity of convolutional kernels indicates richer image information reflected in a convolution operation.

The convolutional kernel may be initialized in a form of a random-size matrix. In a training process of the convolutional neural network, the convolutional kernel may obtain an appropriate weight through learning. In addition, direct benefits brought by weight sharing are that connections between layers of the convolutional neural network are reduced, and an overfitting risk is reduced.

3. Transformer

The transformer is structured as a feature extraction network (similar to a convolutional neural network) that includes an encoder and a decoder.

The encoder performs feature learning in a global receptive field through self-attention, for example, features of pixels.

The decoder learns features of required modules through self-attention and cross-attention, for example, a feature of an output box.

The following describes attention (which may also be referred to as an attention mechanism).

The attention mechanism may be used to quickly extract important features of sparse data. The attention mechanism occurs between the encoder and the decoder or between an input sentence and a generated sentence. A self-attention mechanism in a self-attention model occurs inside an input sequence or an output sequence, and may be used to extract a connection between words that are away from each other in a same sentence, for example, a syntactic feature (phrase structure). The self-attention mechanism provides, through QKV, an effective modeling method for capturing global context information. It is assumed that an input is Q (query) and a context is stored in a form of a key-value pair (K, V). In this case, the attention mechanism is actually a mapping function from query to a series of key-value pairs (key, value). The attention function may be essentially described as mapping from query (query) to a series of key-value (key key-value value) pairs. The attention essentially assigns a weight coefficient to each element in a sequence, which can also be understood as soft addressing. If the element in the sequence is stored in a form of (K, V), the attention completes addressing by calculating a similarity between Q and K. The calculated similarity between Q and K reflects importance of the extracted V value, namely, a weight. Then, a final eigenvalue is obtained through weighted summation.

Attention calculation is divided into three steps: 1. calculate similarities between query and all keys to obtain weights, where common similarity functions include dot product, splicing, perceptron, and the like; 2. normalize the weights typically using a softmax function (performing normalization may obtain probability distribution in which a sum of all weight coefficients is 1, and weights of important elements may be highlighted using features of the softmax function); 3. perform weighted summation on the weights and corresponding key values values to obtain a final feature value. A specific calculation formula may be as follows:

$$Attention\ (Q, K, V) = softmax(\frac{QK^T}{\sqrt{d}}) \cdot V$$

,

where d is a dimension of a QK matrix.

In addition, the attention includes the self-attention and the cross-attention. The self-attention may be understood as special attention, that is, inputs of QKV are consistent. Inputs of QKV in the cross-attention are inconsistent. The attention means to use a similarity (for example, an inner product) between features as a weight to integrate a queried feature as an updated value of a current feature. The self-attention is attention extracted based on focus of a feature map itself.

For convolution, a setting of a convolutional kernel limits a size of a receptive field. As a result, a network usually requires a plurality of layers to be stacked to focus on the entire feature map. The self-attention has an advantage of global focus, allowing global spatial information of the feature map to be obtained merely through query and assignment. Specialness of the self-attention in a query key value (query key value, QKV) model is that inputs corresponding to QKV are consistent, where the QKV model is to be described later.

4. Multilayer perceptron (multilayer perceptron, MLP)

The multilayer perceptron, also referred to as a multi-layer perceptron, is a feed-forward artificial neural network model that maps an input to a single output.

5. Loss function

In a process of training a deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the neural network can predict the target value that is actually expected. Therefore, "how to obtain, through comparison, the difference between the predicted value and the target value" needs to be predefined. This is the loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

6. Modality

Generally speaking, the modality is a way things occur or exist. In other words, a source or form of each type of information may be referred to as the modality (Modality). Currently, processing of modalities such as an image, a text, and a voice are mainly performed in a research field.

The modality may also be understood as a "sensory organ", namely, a channel through which an organism receives information by using a perception organ and experience. For example, a person has modalities such as a sense of vision, a sense of hearing, a sense of touch, a sense of taste, and a sense of smell. A multimodality may be understood as fusion of a plurality of senses. For example, a person can communicate with an intelligent device through a plurality of channels such as a sound, a body language, an information carrier (for example, a text, a picture, an audio, and a video), and an environment. The intelligent device integrates multi-modal information to determine an intent of the person and feed back the intent to the person in a plurality of manners such as a text, sound, and a light strip.

Because different modalities are represented in different manners, things are viewed from different perspectives. In view of this, there are some cross-connections (information redundancy) and complementarity (more excellent than a single feature), and even a plurality of different information interactions between modalities. If the multi-modal information can be processed properly, rich feature information can be obtained.

The following describes an application scenario of a data processing method provided in embodiments of this application.

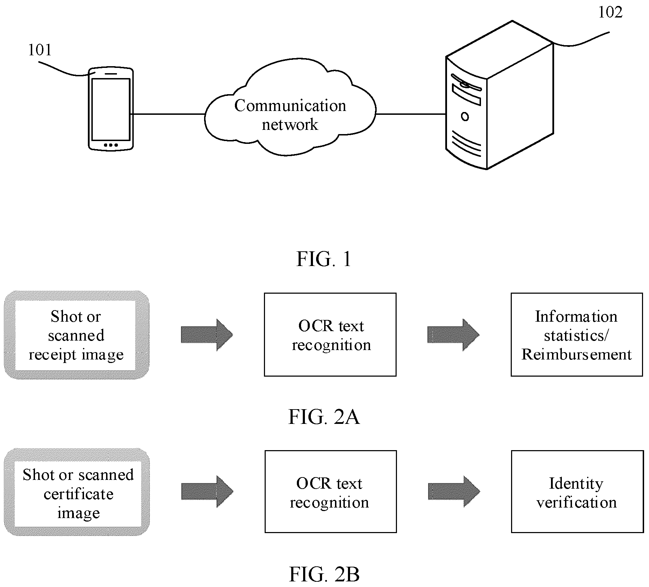

The application scenario is shown in FIG. 1. The scenario includes a terminal device 101 and a server 102. The terminal device 101 and the server 102 may be communicatively connected through a communication network. The network may be a local area network, a wide area network transferred via a relay (relay) device, or the like. Various clients may be installed in the terminal device 101. After a communication connection is established between a client of the terminal device 101 and the server 102 through the communication network, the client of the terminal device 101 may send to-be-processed data to the server 102, and the server 102 performs AI processing (for example, recognition and classification) on the to-be-processed data to obtain a processing result, and then sends the processing result to the client of the terminal device 101.

When a communication network for communicatively connecting the terminal device 101 to the server 102 is a local area network, for example, the communication network may be a near field communication network such as a wireless fidelity (wireless fidelity, Wi-Fi) hot spot network, a Bluetooth (Bluetooth, BT) network, or a near field communication (near field communication, NFC) network.

When a communication network for communicatively connecting the terminal device 101 to the server 102 is a wide area network, for example, the communication network may be 3rd-generation wireless telephone technology (3rd-generation wireless telephone technology, 3G) network, a 4th generation mobile communication technology (4th generation mobile communication technology, 4G) network, a 5th-generation mobile communication technology (5th-generation mobile communication technology, 5G) network, a future evolved public land mobile network (public land mobile network, PLMN), an Internet, or the like.

The terminal device 101 may be a mobile phone, a tablet computer (pad), a portable game console, a palmtop computer (personal digital assistant, PDA), a notebook computer, an ultra-mobile personal computer (ultra-mobile personal computer, UMPC), a handheld computer, a netbook, an in-vehicle media player, a wearable electronic device, a virtual reality (virtual reality, VR) terminal device, an augmented reality (augmented reality, AR) terminal device, a vehicle, an in-vehicle terminal, an aircraft terminal, an intelligent robot, or the like.

The server 102 may be a device or a server that can process a computer vision task, for example, a cloud server, a network server, an application server, or a management server. The computer vision task includes at least one or more of the following: recognition and classification.

Optionally, the scenario shown in FIG. 1 may be understood as a cloud interaction scenario. A data processing method in this scenario may be provided for a user in a form of a cloud service, for example, software as a service (software as a service, SaaS) or function as a service (function as a service, FaaS). For example, the server configured to process the computer vision task may be deployed to a public cloud to provide an externally released cloud service. The cloud service is used to classify images and then perform character recognition on the images. When the data processing method is released externally as a service, in consideration of security, uploaded data such as an image may be further protected, for example, encryption processing may be performed on the image. In some embodiments, the server configured to process the computer vision task may alternatively be deployed to a private cloud to provide a cloud service for internal use. Certainly, the server configured to process the computer vision task can alternatively be deployed to a hybrid cloud. The hybrid cloud is an architecture including at least one public cloud and at least one private cloud.

In a possible implementation, when the data processing method is provided for the user in a form of a cloud service, the cloud service may provide an application programming interface (application programming interface, API) and/or a user interface (also referred to as a user interface). The user interface may be a graphical user interface (graphical user interface) or a command user interface (command user interface, CUI). This allows a service invoker to directly invoke the API provided by the cloud service to perform data processing, for example, classifying images. Certainly, the cloud service may also receive images submitted by the user through the GUI or the CUI, classify the images, and return a classification result.

In another possible implementation, the data processing method provided in this embodiment of this application may be provided for the user by using an encapsulated software package. Specifically, after purchasing the software package, the user may install and use the software package in a running environment of the user. Certainly, the software package may alternatively be pre-installed in a computing device for data processing.

It may be understood that the scenario shown in FIG. 1 is the cloud interaction scenario. To be specific, the terminal device may receive an instruction of the user. For example, the terminal device may obtain image data input/selected by the user, and then initiate a request to the server, so that the server performs data processing application (for example, a computer vision task of classification, segmentation, detection, and image generation) on the image data obtained by the terminal device, to obtain a processing result corresponding to the image data. For example, the terminal device may obtain an image input by the user, and then initiate a character (or referred to as a text) recognition request to the server, so that the server performs character recognition on the image to obtain a character recognition result of the image, and sends the character recognition result to the terminal device. Further, the terminal device may display the character recognition result of the image for the user to view and use.

In an actual application, if computing power of the terminal device is sufficient to process the computer vision task, steps performed by the server in FIG. 1 may also be migrated to the terminal device for implementation. To be specific, the terminal device may receive an instruction of the user. For example, the terminal device may obtain image data input/selected by the user, and then performs data processing application (for example, a computer vision task of classification, segmentation, detection, and image generation) on the image data obtained by the terminal device, to obtain a processing result corresponding to the image data. For example, the terminal device may obtain an image input by the user, and then performs character recognition on the image to obtain a character recognition result of the image, and displays the character recognition result of the image to the user to view and use.

Optionally, the application scenario may be specifically an optical character recognition (optical character recognition, OCR) scenario. For example, the scenario includes at least one or more of the following: certificate information (or referred to as card information), a recognition scenario/an automatic entry scenario of receipt information, an auxiliary reading scenario of a disabled person, or a forbidden word filtering scenario.

For example, the input data is image data/a document, and the computer vision task is a classification task. The terminal device 101 may send the image data/document to the server 102, and the server 102 performs classification recognition on the image data/document to obtain a classification result. The classification result includes a category label of the image data/document. The category label is used to represent a category of the image data/document. Specifically, the category may include a card, a receipt, a label, a mail, a document, or the like. In some possible implementations, the category of the image data/document may be further classified into subcategories. For example, the card may be classified into subcategories such as an employee ID card, a bank card, a pass, and a driving license, and the receipt may include subcategories such as a shopping ticket and a ride hailing ticket. In some embodiments, the classification result may further include a confidence of a corresponding category to which the image data/document belongs. The confidence is a probability value that is determined according to experience and that is used to represent a reliability level. The confidence may be a value in a value range of [0,1]. A value closer to 1 indicates a higher reliability level, and a value closer to 0 indicates a lower reliability level.

Example 1: A receipt recognition scenario is shown in FIG. 2A. In a possible implementation, the terminal device obtains a receipt image shot or scanned by the user, performs OCR text recognition on the receipt image to obtain a recognition result (for example, a date, a company, or an amount), and performs processing such as information statistics/reimbursement based on the recognition result. In another possible implementation, after the terminal device obtains a receipt image shot or scanned by the user, the terminal device obtains a receipt image shot or scanned by the user and sends the receipt image to the server; and the server performs OCR text recognition on the receipt image to obtain a recognition result (for example, a date, a company, or an amount), and sends the recognition result to the terminal device, so that the user can perform processing such as information statistics/reimbursement based on the recognition result.

Example 2: A receipt recognition scenario is shown in FIG. 2B. In a possible implementation, the terminal device obtains a certificate image shot or scanned by the user, performs OCR text recognition on the certificate image to obtain a recognition result (for example, a name, an address, a phone number, or a date), and performs processing such as identity verification based on the recognition result. In another possible implementation, after the terminal device obtains a certificate image shot or scanned by the user, the terminal device obtains a certificate image shot or scanned by the user and sends the certificate image to the server; and the server performs OCR text recognition on the certificate image to obtain a recognition result (for example, a name, an address, a phone number, or a date), and sends the recognition result to the terminal device, so that the user can perform processing such as identity verification based on the recognition result.

As an OCR technology continues to develop rapidly, the application of using OCR technology to replace human labor for recognizing and processing text information in images has become increasingly widespread. The OCR technology is widely applied to real scenarios such as certificate recognition, license plate recognition, advertisement image and text recognition, and receipt recognition. In order to avoid visual occlusions and other adverse factors from interfering with the recognition content, language models are often used to correct character information identified by a visual model, and corrected results are used as final recognition results for the characters. However, the correction results are highly dependent on semantic information learned by the language models, and may lead to the modification of a correct recognition result to an incorrect one, resulting in over-correction problems in the above recognition method. Therefore, how to resolve the over-correction problems of the language model in text recognition is an urgent technical problem to be resolved.

To resolve the foregoing problem, embodiments of this application provide a data processing method and a related device. In a process of performing character recognition on input data, two modal features (a first modal feature and a second modal feature) are both considered. Because different modalities are represented in different manners, things are viewed from different perspectives accordingly. Therefore, there are some cross-connections/complementarity, and even a plurality of different information interactions between modalities. A richer target feature can be obtained by properly handling two modal features, to improve recognition precision. Compared with a method for determining a recognition result based on only a corrected second modal feature, this method can reduce over-correction of the second modal feature by reintroducing a before-correction first modal feature.

The following describes a system architecture provided in embodiments of this application.

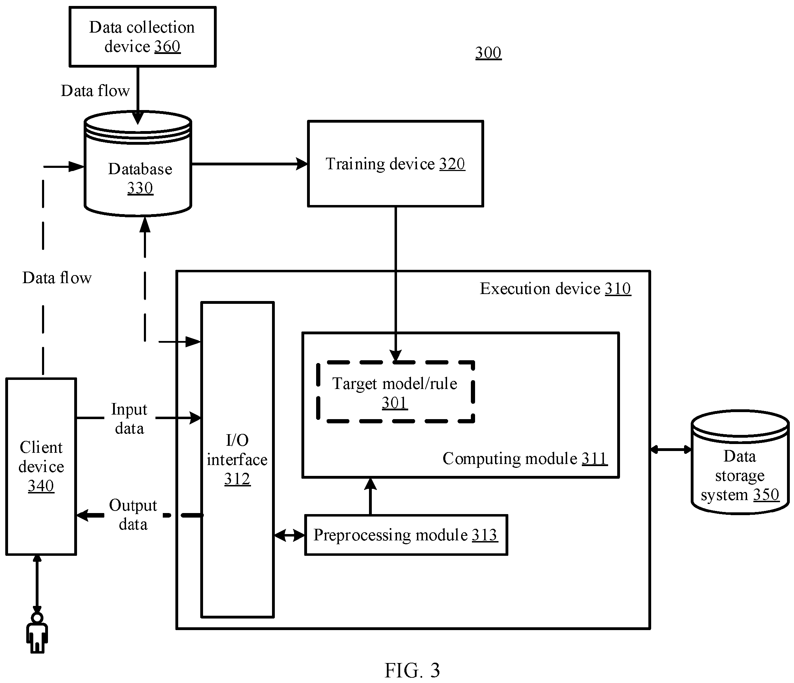

Refer to FIG. 3. An embodiment of this application provides a system architecture 300. As shown in the system architecture 300, a data collection device 360 is configured to: collect training data and save the training data to a database 330. In this embodiment of this application, the training data includes an audio sample, an image sample including a character, or the like. A training device 320 obtains a target model/rule 301 through training based on the training data maintained in the database 330. The following describes in more detail how the training device 320 obtains the target model/rule 301 based on the training data. The target model/rule 301 can be used to implement a computer vision task to which the data processing method provided in this embodiment of this application is applied. The computer vision task may include recognition, classification, and other tasks. The target model/rule 301 in this embodiment of this application may specifically include at least one or more of the following: a CNN, a transformer, and an MLP. It should be noted that, in an actual application, the training data maintained in the database 330 is not necessarily collected by the data collection device 360, but may be received from another device. In addition, it should be noted that the training device 320 does not necessarily train the target model/rule 301 completely based on the training data maintained in the database 330, or may obtain training data from a cloud or another place for model training. The foregoing descriptions should not be construed as a limitation on embodiments of this application.

The target model/rule 301 obtained through training by the training device 320 may be applied to different systems or devices, for example, applied to an execution device 310 shown in FIG. 3. The execution device 310 may be a terminal, for example, a mobile phone terminal, a tablet computer, a notebook computer, an augmented reality (augmented reality, AR) device/a virtual reality (virtual reality, VR) device, or an in-vehicle terminal. Certainly, the execution device 310 may alternatively be a server, a cloud, or the like. In FIG. 3, the execution device 310 is equipped with an I/O interface 312, configured to exchange data with an external device. A user may input data to the I/O interface 312 by using a client device 340. In this embodiment of this application, the input data may include image data, audio data, and the like. In addition, the input data may be input by the user, or may be uploaded by the user by using a photographing device, or certainly may be from a database. This is not specifically limited herein.

A preprocessing module 313 is configured to perform preprocessing based on the input data received by the I/O interface 312. In this embodiment of this application, the preprocessing module 313 may be configured to split the input data to obtain a data subset. For example, the input data is image data. The preprocessing module 313 is configured to split an image to obtain a plurality of image blocks.

In a process in which the execution device 310 preprocesses the input data, or in a process in which a computing module 311 of the execution device 310 performs related processing such as computing, the execution device 310 may invoke data, code, and the like in a data storage system 350 for corresponding processing; and may also store, in the data storage system 350, data, instructions, and the like that are obtained through corresponding processing.

Finally, the I/O interface 312 returns a processing result, for example, an obtained result corresponding to the foregoing computer vision task, to the client device 340, so as to provide the processing result to the user.

It should be noted that the training device 320 may generate corresponding target models/rules 301 for different targets or different tasks based on different training data. The corresponding target models/rules 301 may be used to achieve the foregoing targets or complete the foregoing tasks, to provide required results for the user.

In a case shown in FIG. 3, the user may manually provide the input data and the user may manually provide the input data on an interface provided through the I/O interface 312. In another case, the client device 340 may automatically send the input data to the I/O interface 312. If the client device 340 needs to obtain authorization from the user to automatically send the input data, the user may set corresponding permission in the client device 340. The user may view, on the client device 340, a result output by the execution device 310. A specific presentation form may be a specific manner such as display, sound, or an action. The client device 340 may alternatively be used as a data collection end, to collect, as new sample data, the input data input to the I/O interface 312 and the output result output from the I/O interface 312 that are shown in the figure, and store the new sample data in the database 330. Certainly, the client device 340 may alternatively not perform collection. Instead, the I/O interface 312 directly stores, in the database 330 as new sample data, the input data input to the I/O interface 312 and the output result output from the I/O interface 312 that are shown in the figure.

It should be noted that FIG. 3 is merely a diagram of a system architecture according to an embodiment of this application. A position relationship between the devices, the components, the modules, and the like shown in the figure does not constitute any limitation. For example, in FIG. 3, the data storage system 350 is an external memory relative to the execution device 310, but in another case, the data storage system 350 may alternatively be disposed in the execution device 310.

As shown in FIG. 3, the target model/rule 301 is obtained through training by the training device 320. The target model/rule 301 in this embodiment of this application may be specifically a target neural network.

The terminal device in the scenario shown in FIG. 1 may be specifically the client device 340 or the execution device 310 in FIG. 3. The data storage system 350 may store to-be-processed data of the execution device 310. The data storage system 350 may be integrated into the execution device 310, or disposed on a cloud or another network server.

The following describes a hardware structure of a chip provided in an embodiment of this application.

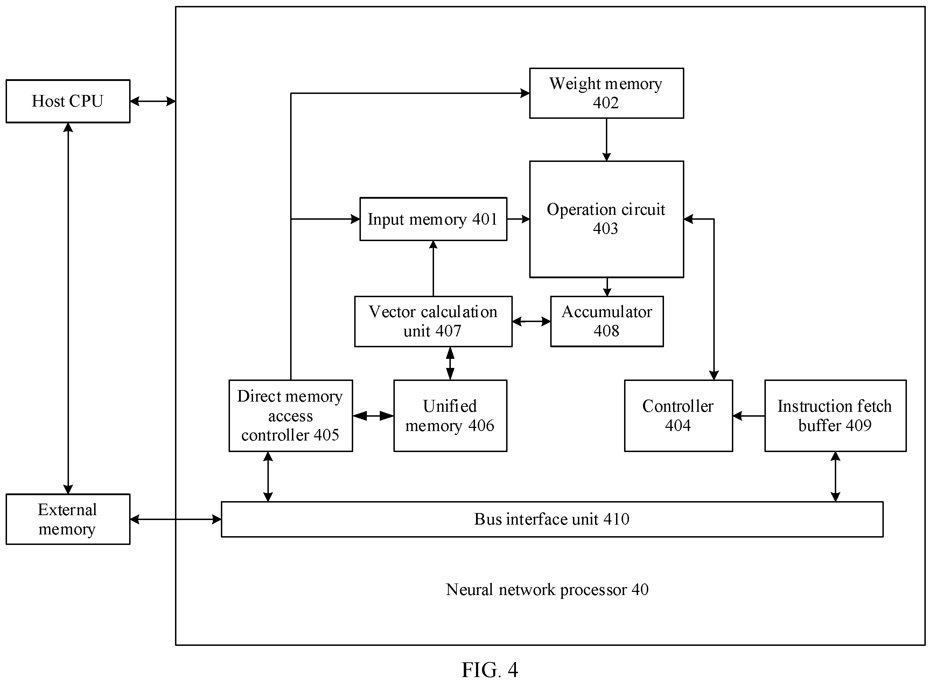

FIG. 4 shows a hardware structure of a chip according to an embodiment of this application. The chip includes a neural network processor 40. The chip may be disposed in the execution device 310 shown in FIG. 3, to complete computing work of the computing module 311. The chip may alternatively be disposed in the training device 320 shown in FIG. 3, to complete training work of the training device 320 and output the target model/rule 301.

The neural network processor 40 may be any processor suitable for large-scale exclusive OR operation processing, for example, a neural-network processing unit (neural-network processing unit, NPU), a tensor processing unit (tensor processing unit, TPU), or a graphics processing unit (graphics processing unit, GPU). The NPU is used as an example. The neural network processor 40 serves as a coprocessor, and is disposed on a host central processing unit (central processing unit, CPU) (host CPU). The host CPU assigns a task. A core part of the NPU is an operation circuit 403. A controller 404 controls the operation circuit 403 to extract data in a memory (a weight memory or an input memory) and perform an operation.

In some implementations, the operation circuit 403 internally includes a plurality of processing engines (processing engines, PEs). In some implementations, the operation circuit 403 is a two-dimensional systolic array. The operation circuit 403 may alternatively be a one-dimensional systolic array or another electronic circuit capable of performing mathematical operations such as multiplication and addition. In some implementations, the operation circuit 403 is a general-purpose matrix processor.

For example, it is assumed that there is an input matrix A, a weight matrix B, and an output matrix C. The operation circuit 403 extracts corresponding data of the matrix B from a weight memory 402, and buffers the data on each PE in the operation circuit. The operation circuit extracts data of the matrix A from an input memory 401, performs a matrix operation on the data and the matrix B, and stores an obtained partial result or final result of the matrix in an accumulator 408.

A vector calculation unit 407 may perform further processing on an output of the operation circuit, for example, vector multiplication, vector addition, exponential operation, logarithmic operation, and value comparison. For example, the vector calculation unit 407 may be configured to perform network computing, such as pooling (pooling), batch normalization (batch normalization), or local response normalization (local response normalization), at a non-convolutional/non-FC layer in a neural network.

In some implementations, the vector calculation unit 407 saves a processed output vector to a unified memory 406. For example, the vector calculation unit 407 may apply a non-linear function to the output of the operation circuit 403, for example, a vector of an accumulated value, to generate an activation value. In some implementations, the vector calculation unit 407 generates a normalized value, a combined value, or both. In some implementations, the processed output vector can be used as an activation input to the operation circuit 403, for example, for use in subsequent layers in the neural network.

The unified memory 406 is configured to store input data and output data.

For weight data, a direct memory access controller (direct memory access controller, DMAC) 405 directly transfers input data in an external memory to the input memory 401 and/or the unified memory 406, stores the weight data in the external memory in the weight memory 402, and stores the data in the unified memory 406 in the external memory.

A bus interface unit (bus interface unit, BIU) 410 is configured to implement interaction between the host CPU, the DMAC, and an instruction fetch buffer 409 through a bus.

The instruction fetch buffer (instruction fetch buffer) 409 connected to the controller 404 is configured to store instructions used by the controller 404.

The controller 404 is configured to invoke the instructions buffered in the instruction fetch buffer 409, to control a working process of an operation accelerator.

Usually, the unified memory 406, the input memory 401, the weight memory 402, and the instruction fetch buffer 409 each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

The following describes a data processing method provided in embodiments of this application. The method may be performed by a data processing device, or may be performed by a component (for example, a processor, a chip, or a chip system) of a data processing device. The data processing device may be the server or the terminal device in FIG. 1 to FIG. 2B. Certainly, the method may also be performed by a system including a server and a terminal device (as shown in FIG. 1). Optionally, the method may be processed by a CPU of the data processing device, or may be jointly processed by a CPU and a GPU, or may be processed by another processor suitable for neural network computation instead of a GPU. This is not limited in this application. In addition, data in embodiments of this application may be a text, an image, an audio, a video, or the like. For ease of description, only an example in which the data is an image is used for description in this specification.

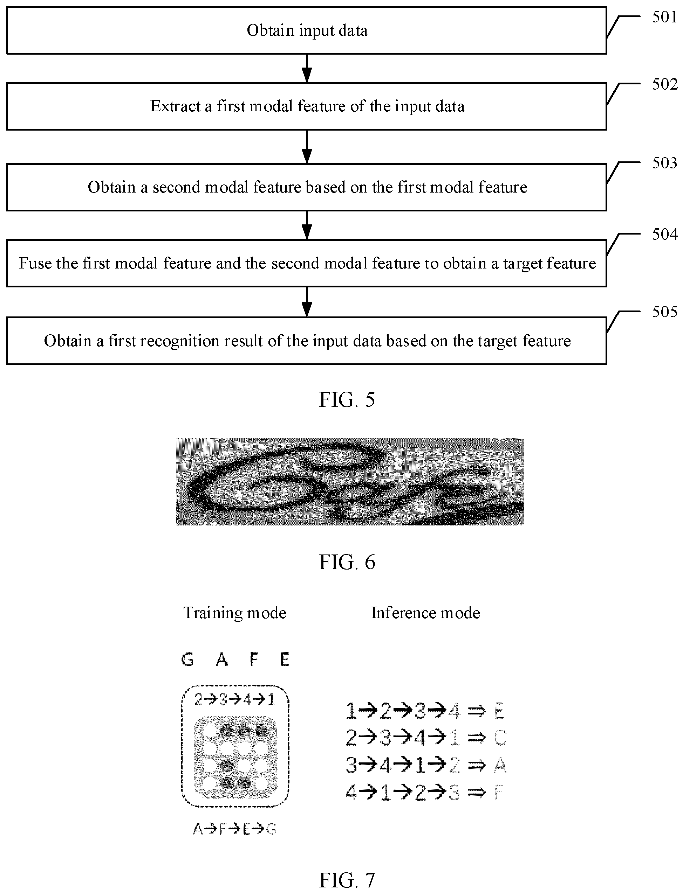

FIG. 5 is a schematic flowchart of a data processing method according to an embodiment of this application. The method may include step 501 to step 505. The following describes the step 501 to the step 505 in detail.

Step 501: Obtain input data.

In this embodiment of this application, a data processing device obtains the input data in a plurality of manners that may be a collection/photographing manner, a manner of receiving data sent by another device, a manner of selecting data from a database, or the like. This is not specifically limited herein.

In this embodiment of this application, only an example in which the input data is image data including a character is used for description. In an actual application, the input data may alternatively be audio data, video data, or the like. This is not specifically limited herein. The character may also be understood as a text (for example, Chinese or English).

For example, when the input data is image data, the method may be applied to a scenario of character recognition or text recognition on an image, for example, a recognition scenario/an automatic entry scenario of certificate information and receipt information, a scenario of auxiliary reading for a disabled person, and a forbidden word filtering scenario.

For another example, when the input data is audio data, the method may be applied to a scenario of character recognition or text recognition on an audio, for example, a scenario of auxiliary learning for the mute and deaf.

For example, the input data is the image data including a character. The input data may be shown in FIG. 6.

Step 502: Extract a first modal feature of the input data.

After obtaining the input data, the data processing device may extract the first modal feature of the input data.

Optionally, the data processing device inputs the input data into a first feature extraction module to obtain the first modal feature. The first feature extraction module may include an encoder of a transformer, or may include a convolutional layer/pooling layer of a CNN, or may be an MLP, or the like. A specific structure of the first feature extraction module may be set based on an actual requirement, and is not limited herein.

In addition, the first modal feature is related to a modality of the input data. If the input data is image data, the first feature extraction module is configured to extract a visual feature of the data, that is, the first modal feature is a visual feature (or referred to as a visual feature vector). If the input data is audio data, the first feature extraction module is configured to extract an audio feature of the data, that is, the first modal feature is an audio feature.

Step 503: Obtain a second modal feature based on the first modal feature.

After obtaining the first modal feature, the data processing device may obtain the second modal feature based on the first modal feature. The second modal feature is a character feature, and the first modal feature and the second modal feature are different modal features. For descriptions of the modality, refer to explanations in the foregoing related terms. Details are not described herein again.

Optionally, the data processing device obtains a second recognition result based on the first modal feature, where the second recognition result may also be understood as a preliminary recognition result of a character in the input data, and inputs the second recognition result into a second extraction module to obtain the second modal feature. The second feature extraction module is configured to extract a character feature (or referred to as a character feature vector) of the character. For a classification task, the second recognition result may be understood as a preliminary classification result. Similar to the first feature extraction module, the second feature extraction module may be an encoder of a transformer, a convolutional layer/pooling layer, an MLP, or the like. In a text recognition (or referred to as character recognition) scenario, the second feature extraction module is usually the encoder of the transformer.

Specifically, for a classification task, the data processing device inputs the first modal feature into a classification module to obtain the second recognition result, where the classification module corresponds to the first feature extraction module. For example, when the first feature extraction module is an encoder, the classification module may be a decoder.

For example, the example in FIG. 6 continues to be used. The second recognition result is "GAFE".

Step 504: Fuse the first modal feature and the second modal feature to obtain a target feature.

After obtaining the second modal feature, the data processing device may fuse the first modal feature and the second modal feature to obtain the target feature. In this step, different modal data information can be efficiently fused, so that the obtained target feature has a feature of multi-modal data, and is more expressive.

Optionally, a first modal feature and a second modal feature that are of characters at a same location are fused to obtain a target feature. Specifically, the data processing device may input the first modal feature and the second modal feature into a feature fusion module for alignment and fusion, to obtain the target feature. The fusion may be vector addition, weighted summation, or the like. This is not specifically limited herein. The feature fusion module is configured to fuse different modal features corresponding to characters at a same location. For example, a fusion layer is of a transformer structure.

For example, the foregoing process is shown in Formula 1:

$$\text{Formula 1:} \quad E_i = E_i^t + E_i^z,$$

where $E_i$ represents a feature vector of an $i^{\text{th}}$ character after fusion, $E_i^t$ represents a first modal feature (for example, a visual feature vector) of the $i^{th}$ character, $E_i^z$ represents a second modal feature (for example, a character embedding vector) of the $i^{th}$ character, and i is a positive integer.

It may be understood that Formula 1 is an example of obtaining the target feature. In an actual application, there may be another form. For example, the first modal feature and the second modal feature are respectively multiplied by different coefficients to obtain products, and then the obtained products are summed up to obtain the target feature. This is not specifically limited herein.

It should be noted that, if dimensions/lengths of the first modal feature and the second modal feature are different, feature transformation may be first performed on the first modal feature and the second modal feature, and then addition/weighted summation may be performed on the first modal feature and the second modal feature, to improve precision of subsequent character recognition based on the target feature.

Step 505: Obtain a first recognition result of the input data based on the target feature.

After obtaining the target feature, the data processing device obtains the first recognition result of the input data based on the target feature. The first recognition result may also be referred to as a correction result.

Optionally, a correspondence between the target feature and a plurality of characters is determined. A permutation mode set of the plurality of characters is obtained, where the permutation mode set includes a plurality of permutation modes. Then, maximum likelihood estimation is performed on the last character in each permutation mode based on the permutation mode in the permutation mode set, to obtain the first recognition result.

For example, the example continues to be used. The first recognition result is "CAFE". It can be learned that the first recognition result "CAFE" obtained based on the target feature is more accurate than the second recognition result "GAFE".

The foregoing process may be understood as cyclically sorting permutation modes of the plurality of characters to obtain the permutation mode set. For each permutation and combination in the permutation mode set, the last character is used as a to-be-predicted character. The last character is predicted based on a previous character. More context information can be utilized based on the permutation mode set.

Specifically, for a classification task, the data processing device inputs the target feature into a correction module to obtain the first recognition result. The correction module may be a decoder, a fully connected layer, a convolutional layer, or the like.

For example, a process in which the correction module processes the target feature may be shown in Formula 2 and Formula 3:

$$\text{Formula 2:} \quad \max_{\theta} E_{z \sim Z_T} \left[ \sum_{t=1}^{T} \log p_{\theta}\left( x_{Z_t} \middle| x_{Z_{<t}} \right) \right],$$

where E represents an expectation, T is a text/character length, $Z_T$ represents a permutation mode set whose length is T, Z represents a permutation mode obtained through sampling from $Z_T$, $\theta$ represents a model parameter of the correction module, x represents the target feature, $Z_t$ represents a $t^{th}$ character in the Z permutation mode, and $Z_{<t}$ represents first (t-1) characters in the Z permutation mode;

$$\text{Formula 3:} \quad P_i(y) = \frac{\exp\left( e(y)^T g(x) \right)}{\sum_{y'} \exp\left( e(y')^T g(x) \right)},$$

where $P_i(y)$ represents a prediction probability corresponding to a case in which an $i^{th}$ character is $y$, exp represents an exponent with the base of $e$, $e(y)$ represents an embedding (embedding) vector of the $i^{th}$ character, $g(x)$ represents a permutation mode, $\exp(e(y)^T g(x))$ represents a weight in which the $i^{th}$ character is $y$, $y$ is any character in a character set, $y'$ is all characters in the character set, and $\sum_{y'} \exp(e(y')^T g(x))$ represents a sum of weights of all characters in the character set. The character set may be understood as a preset character set or an offline character set.

It may be understood that Formula 2 and Formula 3 are merely examples of obtaining the first recognition result. In an actual application, there may be another form. This is not specifically limited herein.

Further, the correction module may randomly sort training texts during training and predict a context character by using an autoregressive method, to improve precision of character prediction in an inference process. During inference, when predicting each character, the correction module takes the currently predicted character as the last character in a rank. Different context information (for example, left-to-right and right-to-left) is learned in different permutation modes, to improve precision of the first recognition result. A specific procedure may be shown in FIG. 7. For example, there are four lines in a training process, and one circle represents one character. The first line includes "white circle, gray circle, gray circle, gray circle". The second line includes "white circle, white circle, white circle, white circle". The third line includes "white circle, gray circle, white circle, white circle". The fourth line includes "white circle, gray circle, gray circle, white circle". The white circle indicates information that cannot be viewed based on the character, and the gray circle indicates information that can be viewed based on the character. For example, the first line indicates that information about the second character to the fourth character can be seen based on the first character. In an inference process, a permutation mode set includes four permutation modes: "1-2-3-4", "2-3-4-1", "3-4-1-2", and "4-1-2-3". It is inferred based on "1-2-3-4" that the fourth character is E. It is inferred based on "2-3-4-1" that the first character is C. It is inferred based on "3-4-1-2" that the second character is A. It is inferred based on "4-1-2-3" that the third character is F.

In this embodiment of this application, two modal features (the first modal feature and the second modal feature) are both considered in a process of performing character recognition on the input data. Because different modalities are represented in different manners, things are viewed from different perspectives accordingly. Therefore, there are some cross-connections/complementarity, and even a plurality of different information interactions between modalities. A richer target feature can be obtained by properly handling two modal features, to improve recognition precision. Compared with a method for determining a recognition result based on only a corrected second modal feature, this method can reduce over-correction of the second modal feature by reintroducing a before-correction first modal feature.

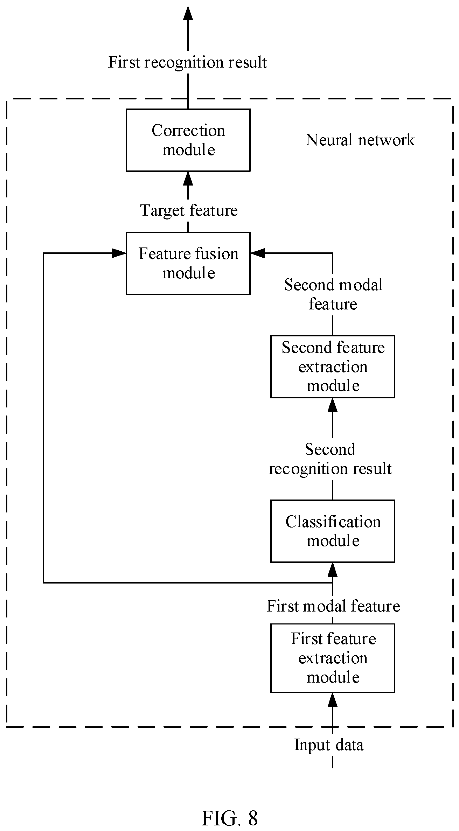

To more intuitively understand a relationship between modules in the embodiment shown in FIG. 5, the following describes a neural network in embodiments of this application with reference to FIG. 8. The neural network includes the first feature extraction module, the classification module, the second feature extraction module, the feature fusion module, and the correction module. The input data is input into the first feature extraction module to obtain the first modal feature, and the first modal feature is input into the classification module to obtain the second recognition result. The second recognition result is input into the second feature extraction module to obtain the second modal feature. The first modal feature and the second modal feature are input into the feature fusion module to obtain the target feature. The target feature is input into the correction module to obtain the first recognition result. For a structure of each module, refer to the foregoing descriptions. Details are not described herein again.

For example, the input data is image data. The first feature extraction module and the classification module shown in FIG. 8 may be understood as submodules of a visual model. For example, the input data is audio data. The first feature extraction module and the classification module shown in FIG. 8 may be understood as submodules of an audio model.

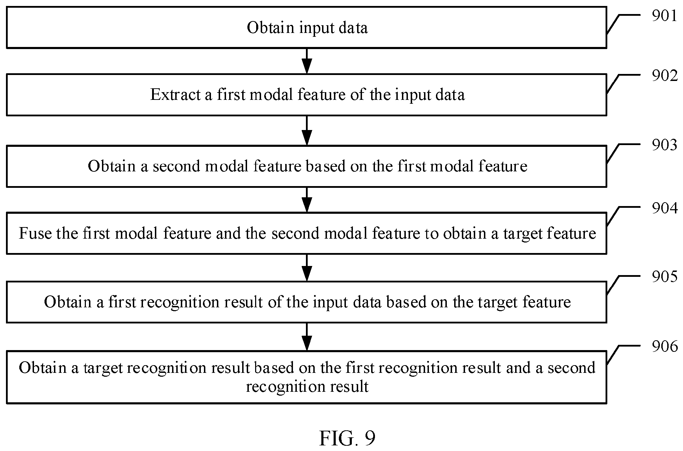

In addition, to make full use of information about two modalities, an embodiment of this application further provides a data processing method. As shown in FIG. 9, the method may include step 901 to step 906. The following describes the step 901 to the step 906 in detail.

Step 901: Obtain input data.

Step 902: Extract a first modal feature of the input data.

Step 903: Obtain a second modal feature based on the first modal feature.

Step 904: Fuse the first modal feature and the second modal feature to obtain a target feature.

Step 905: Obtain a first recognition result of the input data based on the target feature.

Step 901 to step 905 in this embodiment are similar to step 501 to step 505 in the embodiment shown in FIG. 5. Details are not described again herein.

Step 906: Obtain a target recognition result based on the first recognition result and a second recognition result. Alternatively, it is understood that the target recognition result is used as a final recognition result of a character in the input data.

After obtaining the first recognition result and the second recognition result, a data processing device obtains the target recognition result based on the first recognition result and the second recognition result, and uses the target recognition result as a character recognition result of the input data.

Optionally, the data processing device first obtains a first probability and a second probability, where the first probability is a probability of each character in the first recognition result, and the second probability is a probability of each character in the second recognition result; and then determines the target recognition result based on the first probability and the second probability.

Specifically, the data processing device adds a first probability and a second probability that correspond to characters at a same location in the first recognition result and the second recognition result (for example, direct addition or addition after respective weighting), and then determines the target recognition result based on a probability obtained through addition. The characters at a same location may also be understood as characters of indexes at a same location.

For example, the first recognition result and the second recognition result are input into the probability fusion module to obtain the target recognition result. The probability fusion module may also be referred to as a probability residual structure.

For example, a processing process of the probability fusion module may be shown in Formula 4:

$$\text{Formula 4: } y_i = \arg\max_{c}\left(P_i^0 + P_i\right),$$

where $y_i$ represents a target recognition result of an $i^{th}$ character, $P_i^0$ represents a first probability of the $i^{th}$ character, $P_i$ represents a second probability of the $i^{th}$ character, and $\arg\max_{c}(\ )$ indicates that a character whose probability is greater than a threshold or whose probability is the largest is selected from a character pool as an output.

It may be understood that Formula 4 is merely an example of obtaining the first recognition result. In an actual application, there may be another form. This is not specifically limited herein.

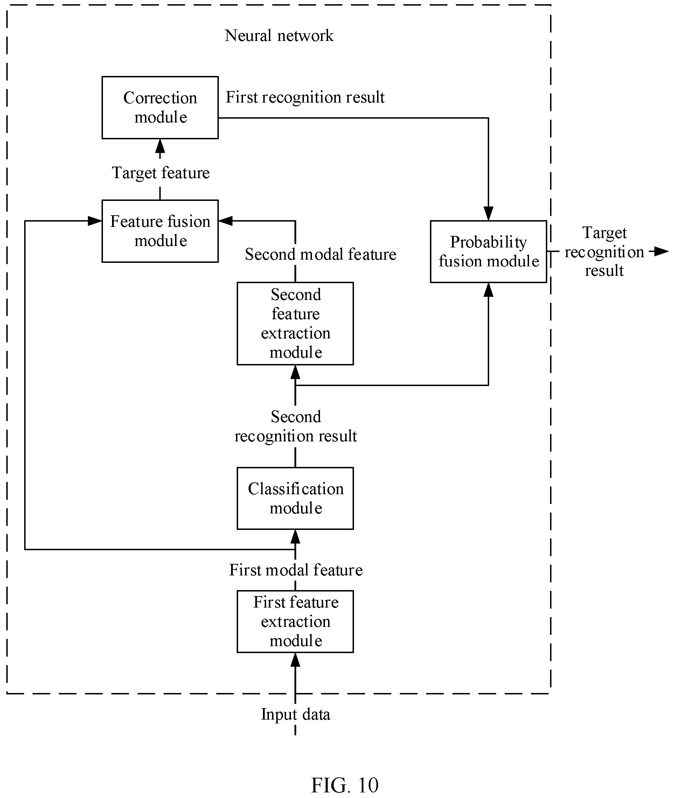

A neural network in this embodiment may be shown in FIG. 10. The neural network further includes the probability fusion module in addition to the modules of the neural network shown in FIG. 8. Same modules in the neural network shown in FIG. 10 and the neural network shown in FIG. 8 are not described herein again. A difference between the neural network shown in FIG. 10 and the neural network shown in FIG. 8 lies in that, in the neural network shown in FIG. 10, the data processing device may input the first recognition result and the second recognition result into the probability fusion module to obtain the target recognition result.

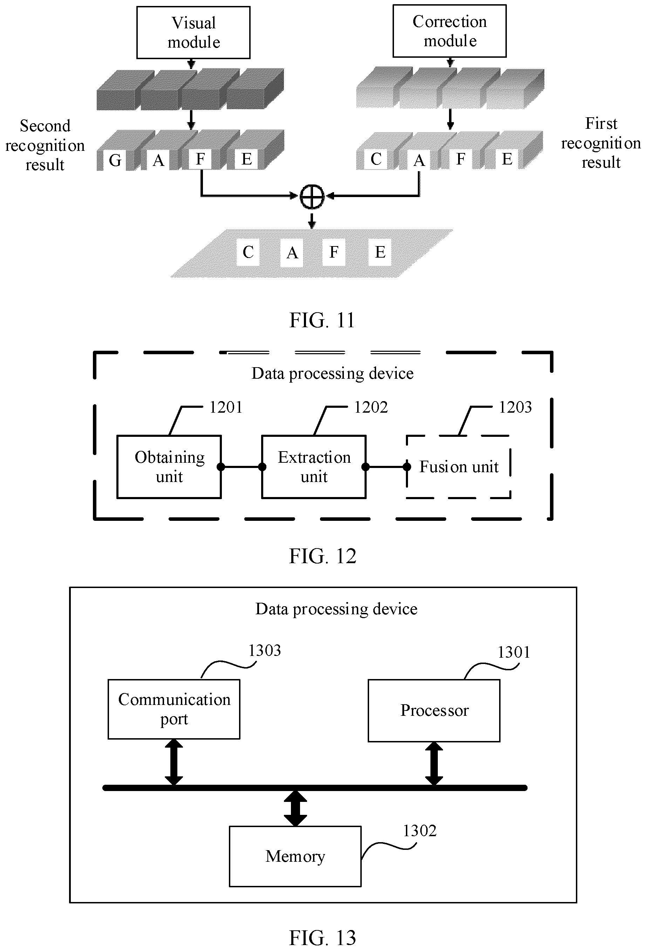

For example, the input data is shown in FIG. 6. A process of step 906 may be shown in FIG. 11. That is, the first recognition result is "CAFE", and the second recognition result is "GAFE". A probability that the first character is C is maximum in a case in which probabilities of the first character in the two recognition results are added. A probability that the second character is A is maximum in a case in which probabilities of the second character in the two recognition results are added. A probability that the third character is F is maximum in a case in which probabilities of the third character in the two recognition results are added. A probability that the fourth character is E is maximum in a case in which probabilities of the fourth character in the two recognition results are added. In view of this, an obtained target recognition result is "CAFE".

Optionally, before probabilities are added, characters in the first recognition result and the second recognition result may be further aligned, and then the probabilities are added.

The probabilities of the two recognition results are added, so that an error rate of outputting the first recognition result by the correction module can be reduced. For the correction module, there are a plurality of possible correction results. caxe is used as an example. If the third character needs to be corrected, there may be cafe/cake/cage. If an output result of a visual module can be used as a reference, the correction result can be improved.

In this embodiment, two modal features (the first modal feature and the second modal feature) are both considered in a process of performing character recognition on the input data. Because different modalities are represented in different manners, things are viewed from different perspectives accordingly. Therefore, there are some cross-connections/complementarity, and even a plurality of different information interactions between modalities. A richer target feature can be obtained by properly handling two modal features, to improve recognition precision. Compared with a method for determining a recognition result based on only a corrected second modal feature, this method can reduce over-correction of the second modal feature by reintroducing a before-correction first modal feature. In addition, the probability residual structure may add an original result output by a visual module and a correction result probability output by a language module (or referred to as a correction module or a text module), combining advantages of a strong correction capability of the language module and a strong recognition capability of the visual module. This improves an overall character recognition capability of a neural network.

To intuitively learn beneficial effects of the data processing method provided in embodiments of this application, or understand beneficial effects of the neural network provided in embodiments of this application, the following describes test results on different data sets in the conventional technology. For example, the dataset includes IIIT, SVT, IC13, SVTP, IC15, CUTE, and OOV-ST.

The test results are shown in Table 1 to Table 3.

**Table 1**

| Input | RP | IIIT, SVT, IC13, SVTP, IC15, CUTE | IIIT | | | OOV-ST | | | |
|---|---|---|---|---|---|---|---|---|---|
| | | | IV | OOV | Gap | IV | OOV | Gap | All |
| Quantity of samples | | 7248 | 2542 | 458 | - | 79684 | 36231 | - | 115915 |
| V+L | × | 91.1 | 97.2 | 83 | 14.2 | 72.5 | 52.9 | 19.6 | 66.4 |
| V+L | √ | 92.0 | 97.7 | 87.6 | 10.1 | 75.1 | 56.6 | 18.5 | 69.3 |

English abbreviations in Table 1 are first explained as follows, including probability addition (residual probability, RP), in vocabulary (In Vocabulary, IV), out of vocabulary (Out of Vocabulary, OOV), gap: which is a difference between IV and OOV, All: total precision, and V+L: fusion of two modal features (for example, a visual feature and a character feature).

It can be learned that total precision using a method of combining modal fusion and probability addition (that is, V+L-√) is greater than that using a method of modal fusion without probability addition (that is, V+L-×), that is, using probability addition can improve overall precision of character recognition. V+L-√ is equivalent to the method in the embodiment shown in FIG. 9, while V+L-× is equivalent to the method in the embodiment shown in FIG. 5.

Table 2

| Fusion Module | regular | | | irregular | | | |
|---|---|---|---|---|---|---|---|
| | IIIT | SVT | IC13 | SVTP | IC15 | CUTE | Avg |
| Quantity of samples | 3000 | 647 | 857 | 645 | 1811 | 288 | 7248 |
| None | 95.6 | 90.4 | 92.3 | 84.7 | 84.1 | 90.3 | 91.2 |
| BCN | 96 | 91.2 | 95.9 | 86.4 | 84.6 | 89.2 | 91.6 |
| Neural network in this embodiment of this application | 96.2 | 91.8 | 96.6 | 87.0 | 84.9 | 91.0 | 92.0 |

English abbreviations in Table 2 are first explained. "regular" represents a normal text, "irregular" represents a curved text, "Fusion Module" represents the probability fusion module and correction module, and "Avg" represents average precision.

It can be learned that average precision of the neural network provided in this embodiment of this application on a plurality of samples in each dataset is higher than that in another method.

Table 3

| Input | RP | IIIT | | | OOV-ST | | | |
|---|---|---|---|---|---|---|---|---|
| | | IV | OOV | Gap | IV | OOV | Gap | Avg |
| Quantity of samples | | 2542 | 458 | - | 79684 | 36231 | - | 115915 |
| V | √ | 97.6 | 85.2 | 12.4 | 72.6 | 55.1 | 17.5 | 67.2 |
| L | √ | 98.5 | 86.2 | 12.3 | 74.1 | 52.6 | 21.5 | 67.3 |
| V+L | × | 97.2 | 83 | 14.2 | 72.5 | 52.9 | 19.6 | 66.4 |
| V+L | √ | 97.7 | 87.6 | 10.1 | 75.1 | 56.6 | 18.5 | 69.3 |
| ABINet-LV(*) | | 98.2 | 86.5 | 11.7 | 75 | 52 | 23 | 67.8 |

It can be learned that average precision of V+L-√ on a plurality of samples in each data set is greater than average precision of V+L-× on a plurality of samples in each data set, that is, probability addition can improve overall precision of character recognition.

In conclusion, it can be learned that the data processing method or the neural network provided in embodiments of this application can improve precision of text/character recognition.

The foregoing describes the data processing method in embodiments of this application, and the following describes a data processing device in embodiments of this application. Refer to FIG. 12. An embodiment of the data processing device in embodiments of this application includes:

an obtaining unit 1201, configured to obtain input data, where the input image is image data or audio data;
an extraction unit 1202, configured to extract a first modal feature of the input data, where
the obtaining unit 1201 is further configured to obtain a second modal feature based on the first modal feature, the first modal feature and the second modal feature are different modal features, the first modal feature is a visual feature of the image data or an audio feature of the audio data, and the second modal feature is a character feature; and
a fusion unit 1203, configured to fuse the first modal feature and the second modal feature to obtain a target feature, where
the obtaining unit 1201 is further configured to obtain a first recognition result of the input data based on the target feature, where the first recognition result is used to indicate a character included in the input data.

Optionally, the obtaining unit 1201 is further configured to obtain a target recognition result of the input data based on the second recognition result and the first recognition result. The target recognition result is used as a recognition result of the character in the input data. Alternatively, it is understood that the target recognition result is used as a final recognition result of the character in the input data.

In this embodiment, operations performed by the units in the data processing device are similar to those described in the embodiments shown in FIG. 1 to FIG. 11. Details are not described herein again.

In this embodiment, two modal features (the first modal feature and the second modal feature) are both considered in a process of performing character recognition on the input data. Because different modalities are represented in different manners, things are viewed from different perspectives accordingly. Therefore, there are some cross-connections/complementarity, and even a plurality of different information interactions between modalities. A richer target feature can be obtained by properly handling two modal features, to improve recognition precision. Compared with a method for determining a recognition result based on only a corrected second modal feature, this method can reduce over-correction of the second modal feature by reintroducing a before-correction first modal feature. In addition, the obtaining unit 1201 adds an original result output by a visual module and a correction result probability output by a language module (or referred to as a correction module or a text module), combining advantages of a strong correction capability of the language module and a strong recognition capability of the visual module. This improves an overall character recognition capability of a neural network.

FIG. 13 is a diagram of another structure of a data processing device according to an embodiment of this application. The data processing device may include a processor 1301, a memory 1302, and a communication port 1303. The processor 1301, the memory 1302, and the communication port 1303 are interconnected through a line. The memory 1302 stores program instructions and data.

The memory 1302 stores program instructions and data that correspond to the steps performed by the data processing device in the corresponding implementations shown in FIG. 1 to FIG. 11.

The processor 1301 is configured to perform the steps performed by the data processing device in any one of the embodiments shown in FIG. 1 to FIG. 11.

The communication port 1303 may be configured to: receive and send data, and is configured to perform steps related to obtaining, sending, and receiving in any one of the embodiments shown in FIG. 1 to FIG. 11.

In an implementation, the data processing device may include more or fewer components than those shown in FIG. 13. This is merely an example for description, and is not limited in this application.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (ROM, read-only memory), a random access memory (RAM, random access memory), a magnetic disk, or an optical disc.

**Claims**

1. A data processing method, wherein the method comprises:

obtaining input data, wherein the input data is image data or audio data;

extracting a first modal feature of the input data;

obtaining a second modal feature based on the first modal feature, wherein the first modal feature and the second modal feature are different modal features, the first modal feature is a visual feature of the image data or an audio feature of the audio data, and the second modal feature is a character feature;

fusing the first modal feature and the second modal feature to obtain a target feature; and

obtaining a first recognition result of the input data based on the target feature, wherein the first recognition result is used to indicate a character comprised in the input data.

2. The method according to claim 1, wherein the obtaining a second modal feature based on the first modal feature comprises:

obtaining a second recognition result based on the first modal feature, wherein the second recognition result is a character recognition result of the image data or a character recognition result of the audio data; and

obtaining the second modal feature based on the second recognition result.

3. The method according to claim 2, wherein the extracting a first modal feature of the input data comprises:

inputting the input data into a first feature extraction module to obtain the first modal feature, wherein the first feature extraction module is configured to extract the visual feature or the audio feature; and

the obtaining the second modal feature based on the second recognition result comprises:

inputting the second recognition result into a second feature extraction module to obtain the second modal feature, wherein the second feature extraction module is configured to extract the character feature.

4. The method according to claim 2 or 3, wherein the method further comprises:

obtaining a target recognition result of the input data based on the second recognition result and the first recognition result, wherein the target recognition result is used as a recognition result of the character in the input data.

5. The method according to claim 4, wherein the obtaining a target recognition result of the input data based on the second recognition result and the first recognition result comprises:

obtaining a first probability and a second probability, wherein the first probability is a probability of each character in the first recognition result, and the second probability is a probability of each character in the second recognition result; and

determining the target recognition result based on the first probability and the second probability.

6. The method according to claim 5, wherein the determining the target recognition result based on the first probability and the second probability comprises:

adding a first probability and a second probability that correspond to characters at a same location in the first recognition result and the second recognition result; and

determining the target recognition result based on a probability obtained through addition.

7. The method according to any one of claims 1 to 6, wherein the fusing the first modal feature and the second modal feature to obtain a target feature comprises:

fusing a first modal feature and a second modal feature that are of characters at a same location, to obtain a target feature.

8. The method according to any one of claims 1 to 7, wherein the obtaining a first recognition result of the input data based on the target feature comprises:

determining a correspondence between the target feature and a plurality of characters;

obtaining a permutation mode set of the plurality of characters, wherein the permutation mode set comprises a plurality of permutation modes; and

performing maximum likelihood estimation on the last character in each permutation mode based on the permutation mode in the permutation mode set, to obtain the first recognition result.

9. A data processing device, wherein the data processing device comprises:

an obtaining unit, configured to obtain input data, wherein the input data is image data or audio data;

an extraction unit, configured to extract a first modal feature of the input data, wherein

the obtaining unit is further configured to obtain a second modal feature based on the first modal feature, the first modal feature and the second modal feature are different modal features, the first modal feature is a visual feature of the image data or an audio feature of the audio data, and the second modal feature is a character feature; and

a fusion unit, configured to fuse the first modal feature and the second modal feature to obtain a target feature, wherein

the obtaining unit is further configured to obtain a first recognition result of the input data based on the target feature, wherein the first recognition result is used to indicate a character comprised in the input data.

10. The data processing device according to claim 9, wherein the obtaining unit is specifically configured to obtain a second recognition result based on the first modal feature, wherein the second recognition result is a character recognition result of the image data or a character recognition result of the audio data; and

the obtaining unit is specifically configured to obtain the second modal feature based on the second recognition result.

11. The data processing device according to claim 10, wherein the extraction unit is specifically configured to input the input data into a first feature extraction module to obtain the first modal feature, wherein the first feature extraction module is configured to extract the visual feature or the audio feature; and

the obtaining unit is specifically configured to input the second recognition result into a second feature extraction module to obtain the second modal feature, wherein the second feature extraction module is configured to extract the character feature.

12. The data processing device according to claim 10 or 11, wherein the obtaining unit is further configured to obtain a target recognition result of the input data based on the second recognition result and the first recognition result, wherein the target recognition result is used as a recognition result of the character in the input data.

13. The data processing device according to claim 12, wherein the obtaining unit is specifically configured to obtain a first probability and a second probability, wherein the first probability is a probability of each character in the first recognition result, and the second probability is a probability of each character in the second recognition result; and

the obtaining unit is specifically configured to determine the target recognition result based on the first probability and the second probability.

14. The data processing device according to claim 13, wherein the obtaining unit is specifically configured to add a first probability and a second probability that correspond to characters at a same location in the first recognition result and the second recognition result; and

the obtaining unit is specifically configured to determine the target recognition result based on a probability obtained through addition.

15. The data processing device according to any one of claims 9 to 14, wherein the fusion unit is specifically configured to fuse a first modal feature and a second modal feature that are of characters at a same location, to obtain a target feature.

16. The data processing device according to any one of claims 9 to 15, wherein the obtaining unit is specifically configured to determine a correspondence between the target feature and a plurality of characters;

the obtaining unit is specifically configured to obtain a permutation mode set of the plurality of characters, wherein the permutation mode set comprises a plurality of permutation modes; and

the obtaining unit is specifically configured to perform maximum likelihood estimation on the last character in each permutation mode based on the permutation mode in the permutation mode set, to obtain the first recognition result.

17. A data processing device, comprising a processor, wherein the processor is coupled to a memory, the memory is configured to store a program or instructions, and when the program or the instructions are executed by the processor, the data processing device is enabled to perform the method according to any one of claims 1 to 8.

18. A computer storage medium, comprising computer instructions, wherein when the computer instructions are run on a terminal device, the terminal device is enabled to perform the method according to any one of claims 1 to 8.

**19.** A computer program product, wherein when the computer program product runs on a computer, the computer is enabled to perform the method according to any one of claims 1 to 8.

FIG. 1

FIG. 2A

FIG. 2B

FIG. 3

```
                                                    ┌──────────────────┐
                                                    │  Weight memory   │
                                                    │       402        │
                                                    └──────────────────┘
                                                             │
                                                             ▼
                          ┌──────────────────┐    ┌──────────────────┐
                          │ Input memory 401 │───▶│ Operation circuit│
                          └──────────────────┘    │       403        │
                                     ▲             └──────────────────┘
                                     │                      │
                          ┌──────────────────┐    ┌──────────────────┐
                          │ Vector calculation│◀─▶│   Accumulator    │
                          │     unit 407      │    │       408        │
                          └──────────────────┘    └──────────────────┘
                                     ▲
                                     ▼
┌─────────────┐   ┌──────────────┐  ┌──────────┐  ┌──────────┐  ┌──────────────────┐
│Direct memory│   │              │  │          │  │Controller│  │Instruction fetch │
│   access    │◀─▶│   Unified    │  │          │  │   404    │◀─│   buffer 409     │
│controller405│   │ memory 406   │  │          │  └──────────┘  └──────────────────┘
└─────────────┘   └──────────────┘
```

Host CPU

External
memory

Bus interface unit 410

Neural network processor 40

FIG. 4

Obtain input data — 501

Extract a first modal feature of the input data — 502

Obtain a second modal feature based on the first modal feature — 503

Fuse the first modal feature and the second modal feature to obtain a target feature — 504

Obtain a first recognition result of the input data based on the target feature — 505

FIG. 5

FIG. 6

Training mode                    Inference mode

G    A    F    E

2→3→4→1

A→F→E→G

1→2→3→4 ⇒ E
2→3→4→1 ⇒ C
3→4→1→2 ⇒ A
4→1→2→3 ⇒ F

FIG. 7

First recognition result

Neural network

Correction module

Target feature

Feature fusion module

Second modal feature

Second feature extraction module

Second recognition result

Classification module

First modal feature

First feature extraction module

Input data

FIG. 8

| Obtain input data | 901 |

↓

| Extract a first modal feature of the input data | 902 |

↓

| Obtain a second modal feature based on the first modal feature | 903 |

↓

| Fuse the first modal feature and the second modal feature to obtain a target feature | 904 |

↓

| Obtain a first recognition result of the input data based on the target feature | 905 |

↓

| Obtain a target recognition result based on the first recognition result and a second recognition result | 906 |

FIG. 9

Neural network

Correction module — First recognition result

Target feature

Feature fusion module

Second modal feature

Second feature extraction module

Probability fusion module — Target recognition result

Second recognition result

Classification module

First modal feature

First feature extraction module

Input data

FIG. 10

Visual module

Correction module

Second recognition result

| G | A | F | E |

| C | A | F | E |

First recognition result

⊕

| C | A | F | E |

FIG. 11

Data processing device

Obtaining unit — 1201

Extraction unit — 1202

Fusion unit — 1203

FIG. 12

Data processing device

Communication port — 1303

Processor — 1301

Memory — 1302

FIG. 13

## INTERNATIONAL SEARCH REPORT

| International application No. |
| :-- |
| **PCT/CN2023/119082** |

**A.    CLASSIFICATION OF SUBJECT MATTER**

G06V20/62(2022.01)i

According to International Patent Classification (IPC) or to both national classification and IPC

**B.    FIELDS SEARCHED**

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 百度, BAIDU; IEEE: 光学字符识别, 图像, 图片, 音频, 文本, 字符, 融合, 模态, 特征, OCR, image, picture, audio, text, character, fuse, mode, feature

**C.    DOCUMENTS CONSIDERED TO BE RELEVANT**

| Category* | Citation of document, with indication, where appropriate, of the relevant passages | Relevant to claim No. |
| :-- | :-- | :-- |
| PX | CN 116434752 A (JINGDONG TECHNOLOGY INFORMATION TECHNOLOGY CO., LTD.) 14 July 2023 (2023-07-14) description, paragraphs 29-93 | 1-19 |
| X | CN 112257426 A (BEIJING YILANQUNZHI DATA TECHNOLOGY CO., LTD.) 22 January 2021 (2021-01-22) description, paragraphs 21-78 | 1-19 |
| X | CN 111738251 A (BEIJING ACADEMY OF ARTIFICIAL INTELLIGENCE) 02 October 2020 (2020-10-02) description, paragraphs 18-64 | 1-19 |
| X | CN 115116444 A (TENCENT TECHNOLOGY (SHENZHEN) CO., LTD.) 27 September 2022 (2022-09-27) description, paragraphs 108-356 | 1-19 |
| X | CN 112687296 A (BEIJING CENTURY TAL EDUCATION TECHNOLOGY CO., LTD.) 20 April 2021 (2021-04-20) description, paragraphs 16-86 | 1-19 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| :-- | :-- | :-- | :-- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| :-- | :-- |
| **19 November 2023** | **23 November 2023** |

| Name and mailing address of the ISA/CN | Authorized officer |
| :-- | :-- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/119082**

### C.    DOCUMENTS CONSIDERED TO BE RELEVANT

| Category* | Citation of document, with indication, where appropriate, of the relevant passages | Relevant to claim No. |
|---|---|---|
| A | CN 113822340 A (BEIJING UNIVERSITY OF TECHNOLOGY) 21 December 2021 (2021-12-21)<br>    entire document | 1-19 |
| A | JP 2019074807 A (FUJI XEROX CO., LTD.) 16 May 2019 (2019-05-16)<br>    entire document | 1-19 |

Form PCT/ISA/210 (second sheet) (July 2022)

**INTERNATIONAL SEARCH REPORT**
Information on patent family members

International application No.

**PCT/CN2023/119082**

| Patent document cited in search report | | | Publication date (day/month/year) | Patent family member(s) | | | Publication date (day/month/year) |
|---|---|---|---|---|---|---|---|
| CN | 116434752 | A | 14 July 2023 | None | | | |
| CN | 112257426 | A | 22 January 2021 | None | | | |
| CN | 111738251 | A | 02 October 2020 | CN | 111738251 | B | 04 December 2020 |
| CN | 115116444 | A | 27 September 2022 | None | | | |
| CN | 112687296 | A | 20 April 2021 | CN | 112687296 | B | 29 June 2021 |
| CN | 113822340 | A | 21 December 2021 | None | | | |
| JP | 2019074807 | A | 16 May 2019 | JP | 7021496 | B2 | 17 February 2022 |

Form PCT/ISA/210 (patent family annex) (July 2022)

**REFERENCES CITED IN THE DESCRIPTION**

**Patent documents cited in the description**

- CN 202211289351X